(19) Europäisches Patentamt
European Patent Office
Office européen des brevets

(11) Publication number: 0 104 644
A2

(12) # EUROPEAN PATENT APPLICATION

(21) Application number: 83109597.1

(22) Date of filing: 27.09.83

(51) Int. Cl.³: C 08 K 5/34
C 08 L 23/02
//(C08K5/34, 5/13)

(30) Priority: 29.09.82 US 427361

(43) Date of publication of application:
04.04.84 Bulletin 84/14

(84) Designated Contracting States:
BE CH DE FR GB IT LI NL SE

(71) Applicant: The B.F. GOODRICH Company
Dept. 0015 WHB-6 500 South Main Street
Akron, Ohio 44318(US)

(72) Inventor: Lai, John Ta-Yuan
663 Tollis Parkway
Broadview Heights Ohio 44147(US)

(72) Inventor: Layer, Robert Wesley
3696 Country Club Drive
Silver Lake, Ohio 44224(US)

(74) Representative: von Kreisler, Alek, Dipl.-Chem. et al,
Deichmannhaus am Hauptbahnhof
D-5000 Köln 1(DE)

(54) **Polymeric composition containing diazabicycloalkanes.**

(57) Composition of matter resistant to attack by oxygen comprising a polymeric material containing a bis compound of a 1,4- and 1,5-diazabicycloalkane, a mixture of such compounds, or a synergistic mixture thereof with a hindered phenol antioxidant.

EP 0 104 644 A2

Croydon Printing Company Ltd.

# POLYMERIC COMPOSITIONS CONTAINING DIAZABICYCLOALKANES

## BACKGROUND OF THE INVENTION

Progressive changes in the physical properties of polymeric compositions occur on aging as a result of the combined effects of heat, light, oxygen and ozone. Oxygen and ozone are the agents which are primarily responsible for deterioration of such polymeric compositions and such deterioration is generally referred to as thermal oxidation. It has been shown that an uncured polymer subjected to thermal oxidation first undergoes softening but as the extent of oxidation increases, it gradually becomes harder until a brittle material is finally formed. The tendency toward hardening as aging proceeds, observed in the later stage with an uncured polymer, is observed during the aging of cured polymers, as evidenced by a progressive rise in the modulus.

Antioxidants have been employed to minimize the deteriorating effects of oxidation on polymers. Because of the volatility and relative insolubility of many antioxidants in polymer compositions, only a small portion of the antioxidant added to the polymer system actually remains in the final polymer. It is, therefore, desirable to provide highly efficient, relatively non-fugitive antioxidants which impart a high degree of stability to polymers.

Lai et al U.S. patent application entitled "Polymeric Compositions Containing Antioxidants", filed May 5, 1980, now patent 4,309,336, and Lai et al patent 4,190,571, disclose diazacycloalkane compounds as antioxidants in various polymeric compositions. More specifically, Lai et al patent 4,309,336 discloses bis-1,4-diazabicycloalkane compounds wherein the bridging moiety is a p,p'-xylidene.

## SUMMARY OF THE INVENTION

This invention relates to composition of matter comprising an organic material subject to attack by oxygen and an effective amount of an antioxidant selected from bis compounds of 1,4- and 1,5-diazabicycloalkanes, hereinafter referred to as "DZC", mixtures of such DZC compounds, and synergistic mixtures of DZC compounds with other antioxidants.

## DETAILED DESCRIPTION OF THE INVENTION

The diazabicycloalkane (DZC) compounds are useful in providing oxidative protection for organic materials subject to oxygen attack. Such organic materials can be fatty oils and fats, waxes, triglycerides, and the like, but more typically are olefinic polymers having molecular weight from about 1000 to about 1,000,000 or more. The olefinic polymers can be saturated polymers or copolymers such as the polyesters, polyvinyl halides, polyvinyl alcohols, polymonoolefins, and the like; or dienic polymers or copolymers such as the polybutadienes, polyisoprenes, styrene-butadiene polymers, butadiene-acrylonitrile polymers, and the like. Alternately, the olefinic polymers can be copolymers of mono- and diolefinic monomers such as the ethylene-propylene-diene polymers wherein the diene can be 1,4-hexadiene, dicyclopentadiene, ethylidene norbornene, and the like.

The DZC compounds have particular utility in providing oxidative protection for polymonoolefin polymers and copolymers, especially homopolymers and copolymers of α-monoolefins. Examples of such are polymers of α-monoolefin monomers such as ethylene, propylene, isobutylene, 1-butene, 1-pentene, 1-hexene, 4-methyl-1-pentene, and the like. Polymers

of ethylene, propylene, isobutylene, 1-butene, mixtures thereof, and mixtures with diene monomers are the most common. Such polymers typically have molecular weights ranging from about 3000 to about 20,000 or more.

Useful DZC compounds which impart antioxidant property to various polymers, especially polymonoolefins, include the following:

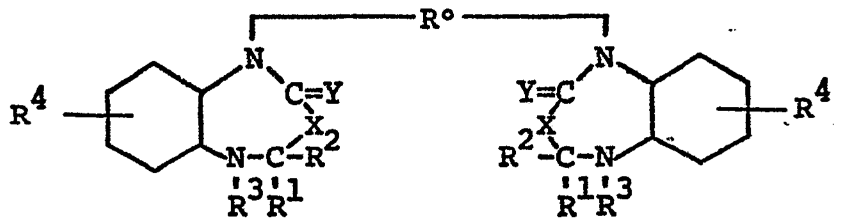

where R° is selected from substituted and unsubstituted alkylene, alkenylene, $-CH_2-R^5-CH_2-$, and ortho- and meta-xylidene groups where the alkylene and alkenylene groups contain 2 to 12 carbon atoms, $R^5$ is selected from 1,2-, 1,3- and 1,4-cyclohexylene groups, and the substituents are selected from alkyl, hydroxylalkyl and cyanoalkyl groups containing 1 to 12 carbon atoms; $R^1$ and $R^2$ are individually selected from alkyl and alkenyl groups of 1 to 12 carbon atoms, cyanoalkyl and aminoalkyl groups of 1 to 12 carbon atoms, cycloalkyl and hydroxycycloalkyl groups of 4 to 14 carbon atoms, aryl and aralkyl groups of 6 to 14 carbon atoms, all of which can contain substituents selected from phosphite, ester and hindered phenolic groups, and which in combination, $R^1$ and $R^2$, represent unsubstituted and substituted cycloalkyl groups of 4 to 14 carbon atoms at least 4 of which are cyclized and can contain a

keto, ester, amide, ether, thio or hydroxyl group; $R^3$ groups are independently selected from hydrogen, alkyl and hydroxyalkyl groups of 1 to 12 carbon atoms, cyanoalkyl groups and aminoalkyl groups of 1 to 12 carbon atoms, alkenyl groups of 2 to 14 carbon atoms, and aryl and aralkyl groups of 6 to 14 carbon atoms; $R^4$ groups are independently selected from hydrogen, alkyl and haloalkyl groups of 1 to 12 carbon atoms, cyanoalkyl and aminoalkyl groups of 1 to 12 carbon atoms, alkenyl groups of 2 to 12 carbon atoms, and aryl and aralkyl groups of 6 to 14 carbon atoms; X is either a $CH_2$ group or a single bond between the adjacent carbon atoms in the diazacyclic group; and Y is either O or $<^H_H$ .

In the preferred embodiment of this invention, $R^o$ is selected from alkylene and alkenylene groups of 2 to 8 carbon atoms, $-CH_2-R^5-CH_2-$where $R^5$is a cyclohexylene group, and m-xylidene groups, all of these groups can also be substituted with alkyl, hydroxyalkyl, aminoalkyl and cyanoalkyl groups containing 1 to 3 carbon atoms; $R^1$ and $R^2$ are individually selected from alkyl groups of 1 to 8 carbon atoms or they can form a cycloaliphatic or a cycloalkyl group wherein 4 to 7 carbons are cyclized; $R^3$ groups are independently selected from hydrogen, alkyl and hydroxyalkyl groups of 1 to 3 carbon atoms; $R^4$ groups are hydrogens; X is a bond between the adjacent ring carbon atoms; and Y is oxygen.

The antioxidants of this invention can be prepared by adding to a reaction vessel a decahydroquinoxalin-2-one, or its counterpart where Y is $<^H_H$ , and a base, such as sodium hydride, in a solvent, such as toluene, and heating contents of the reactor to reflux at about 105°C. After evolution of hydrogen ceases, an α,α'-dihalo-m-xylene or as

dihaloalkylene in a solvent is added to the reactor and reflux is continued overnight for about 15 hours under nitrogen. The reactor is then cooled and water is added to dissolve any remaining base, which forms a two-phase system. The phases are separated, the bottom layer, containing dissolved base, is extracted with a solvent to recover remaining antioxidant compound and this solution is combined with the upper phase and dried with sodium sulfate, filtered, and concentrated by evaporation. The residue is finally mixed with a solvent, such as a toluene-hexane mixture, and a white powder is recovered after filtration. U.S. patent 4,167,512 to Lai et al is incorporated herein by reference for its disclosure of other ways of preparing the antioxidants disclosed herein.

The antioxidants described herein can be used alone or in combination with other antioxidants. When used alone, these antioxidants equal or surpass the known antioxidants in their ability to protect polymeric materials from thermal oxidation. In combination with the known antioxidants, they produce synergistic results in terms of antioxidant function. Any of the phenolic antioxidants can be used with the DZC antioxidants described herein. The antioxidants are also used in combination with carbon black and occasionally, with ultraviolet absorbers. The most effective of the other type of antioxidants are hindered phenols, methylenebis-, 1,1-ethylenebis-, or isopropylidenebis alkylphenols, and thiobisphenols or thiobisamines. Examples of hindered phenolic antioxidants include di-n-octadecyl-d-(3,5-di-t-butyl-4- hydroxy-benzyl malonate, 2,6-di-t-butyl-p-cresol, 4,4'-methylene-bis(3,5-di-t-butylphenol), 2,5-di-t-butylhydro-quinone,

4,4'-thiobis-(2-t-butyl-5-methylphenol), 1,1,3-tris(3,5-dimethyl-4-hydroxyphenyl)-propane, 1,4-di(3,5-di-t-butyl-hydroxybenzyl)-2,3,5,6-tetramethylbenzene, 2,4-bis-(n-octylthio)-6-(3,5-di-t-butyl-4-hydroxyaniline)- 1,3,5-triazine, 2,3-bis-(3,5-di-t-butyl-4-hydroxyphenoxy)-6-(n-octylthio)-1,3,5-triazine, n-octadecyl-3-(3,5-di-t-butyl-4-hydroxyphenyl)-propionate, di-n-octadecyl 3,5-dit-butyl-4-hydroxybenzylphosphonate, tris-(3,5-di-t-butyl4-hydroxybenzyl)isocyanurate, 2,2'-methylenebis[6-(2- methylcyclohexyl)p-cresol,] 4,4'-ethylidenedi-o-cresol, 4,4'-methylenebis(2,6-dialkylphenol), and 2,6-di-tertbutyl-p-cresol. Examples of other antioxidants include N,N'-di-2-naphthyl-p-phenylenediamine, salts or amides of 3,3'-thiodipropionic acid, bis(dimethylthiocarbamoyl)- disulfide, 1,1'-thiodi-2-naphthol, 1,1'-thiobis[N-phenyl2-naphthylamine,] N,N'-(iminodiethylene)bisoctadecanamide, as well as those of aminoacryl series, for instance, of aniline and naphthylamine derivatives as well as their heterocyclic derivatives. U.S. patent 3,998,784 is hereby incorporated by reference for its disclosure of the various antioxidants.

An effective amount of the DZC antioxidant is used in conjunction with a polymeric material to obtain at least a partial protection from thermal oxidation. This amount will vary with the type of polymeric material employed, the particular DZC antioxidant that is selected, whether it is used as a primary or a secondary antioxidant, the type of primary antioxidant used and amount thereof, application of the resulting polymeric material, etc. More specifically, amount of DZC antioxidants used can vary from as little as about 0.001 to about 10 parts per 100 parts of the polymeric material. In a preferred embodiment, amount of these antioxidants can vary from

about 0.01 to about 5 parts, preferably up to about 1 part per 100 parts of the polymeric material. Amount of the other type of antioxidant that can be used in combination with the DZC antioxidants can vary from 0.01 to 5 parts by weight, preferably 0.05 to 1 part per 100 parts of the polymeric material.

The DZC compounds and other antioxidants can be incorporated into the polymeric material by any of the known techniques for compounding additives with a polymer. For example, antioxidant(s) and a polymer can be compounded in an internal mixer. Alternatively, an antioxidant(s) can be added as a solution or slurry in a suitable solvent or dispersant, for instance, in an inert organic solvent such as methanol, ethanol or acetone to powdered polymer and the whole mixed intimately in a mixer and the solvent subsequently removed. As a further alternative, antioxidant(s) can be added to the polymer during the preparation of the latter, for instance, at the latex stage of polymer production, to provide prestabilized polymer material.

Optionally, the composition of this invention can contain one or more additives, especially those used in polymer formulations, such as antioxidants of the phenol or amine type, as noted earlier, U.V. absorbers and light protectants, phosphite stabilizers, peroxide decomposers, polyamide stabilizers, basic co-stabilizers, nucleation agents, plasticizers, lubricants, emulsifiers, anti-static agents, flame-protectants, pigments, carbon black, asbestos, glass-fibres, kaolin and talc.

The following examples illustrate the invention described herein with emphasis on the novel aspects thereof. Contents of these examples are not to be construed as limiting in any way the scope of the invention disclosed herein.

EXAMPLE 1

This example illustrates preparation of trans-1,6-hexamethylene-bis-(3,3-pentamethylene decahydroquinoxalin-2-one) (DZC) by reacting one equivalent of 3,3-pentamethylene-decahydroquinoxalin-2-one (DQ) with half equivalent of 1,6-dichlorohexamethylene in presence of about one equivalent of sodium hydride, as depicted by the following formulas:

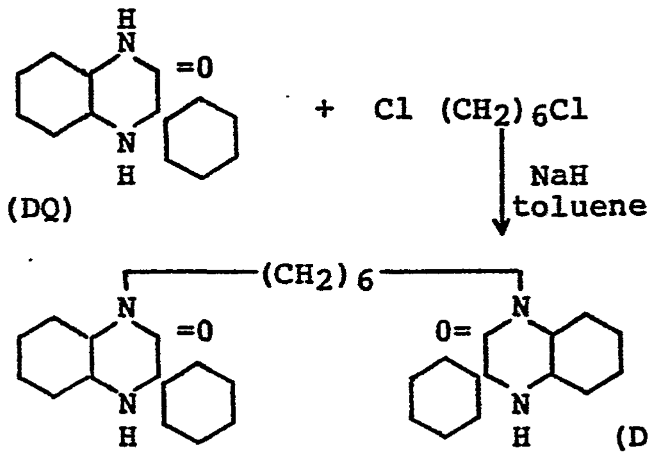


(DQ) (DZC)

In the preparation of the DZC antioxidant, 0.024 moles of sodium hydride was washed once with 20 mls of toluene, then placed in 40 mls of fresh toluene in a 150 ml reaction vessel provided with stirring means, condenser, thermometer, and a heating mantle. All of 0.021 mole of DQ was added to the vessel and heated to reflux at about 105°C under nitrogen. A total of 0.01 mole of the dichlorohexamethylene was added to the reaction vessel in small increments over a period of about one-half hour and the reaction mixture was refluxed overnight for about 15 hours under a blanket of nitrogen. Contents of the reaction mixture were cooled and 15 mls of water was added with agitation. After filtration, 3.1 grams of a white solid product was recovered. The filtrate was extracted with 25 mls of toluene, concentrated and the filter cake was dried whereby additional 1.9 grams of product was obtained.

EXAMPLE 2

Certain of the antioxidants were evaluated alone and in conjunction with another antioxidant, Good-rite 3114 (GR-3114) which, chemically, is tris(3,5-di-t-butyl-4-hydroxybenzyl)isocyanurate. The thermal oxidation tests were carried out by incorporating the antioxidants into Profax 6501l polypropylene at specific concentrations. Plaques 1" x 1" x 0.01" were made from stabilized polypropylene and aged in triplicate in high temperature ovens at 125°C and at 150°C until they were totally degraded. Results of the tests are set forth in Table I, below, where amounts are given in parts by weight per 100 parts of polymer and where designation "AO" represents antioxidant.

TABLE I

| Antioxidant | Days to Failure 125°C | Days to Failure 150°C |
|---|---|---|
| Blank | 2 | 1 |
| 0.1 AO-A | 27-2/3 | 3 |
| 0.25 AO-A | 104 | 8 |
| 0.1 AO-B | 10-2/3 | 1-2/3 |
| 0.23 AO-B | 17-1/3 | 4-2/3 |
| 0.1 AO-C | 20-1/3 | 3 |
| 0.25 AO-C | 65-1/3 | 10 |
| 0.1 AO-D | 31 | 4 2/3 |
| 0.25 GR-3114 | 173-1/3 | 6-1/3 |
| 0.125 GR-3114 + 0.125 AO-A | 184-2/3 | 18-2/3 |

The antioxidants referred to in the above table are identified below:

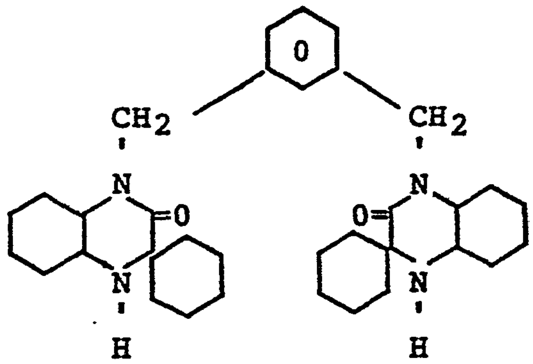

AO-A

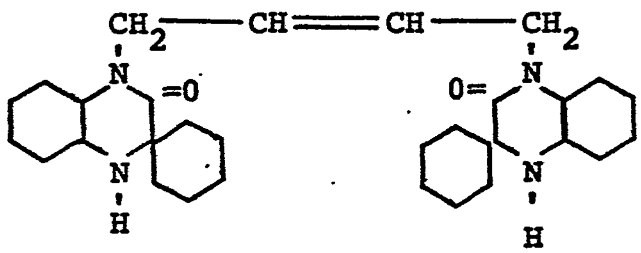

AO-B

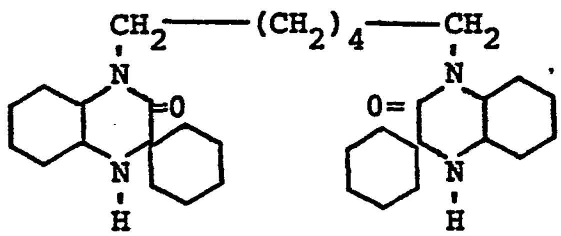

AO-C

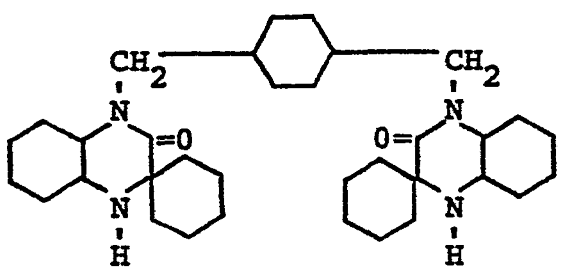

AO-D

From the data presented above, it should be apparent that the antioxidants of this invention have primary and secondary antioxidant properties. Furthermore, the antioxidants disclosed herein can function as well or better than commercial antioxidant GR-3114. Lastly, synergism of the antioxidants of this invention with

GR-3114 has been demonstrated by polypropylene samples containing 0.125 phr of each GR-3114 and AO-A which showed aging of 184-2/3 days at 125°C and 18-2/3 days at 150°C, compared to polypropylene samples containing 0.25 phr of GR-3114 which failed after 173-1/3 days at 125°C and 6-1/3 days at 150°C, as well as polypropylene samples containing 0.25 phr of AO-A which failed after 104 days at 125°C and 8 days at 150°C.

EXAMPLE 3

The procedure of Example 2 was followed in evaluating other antioxidants falling within the invention described herein except that the plauqes were 0.02" in thickness. Results of these tests are set forth in Table II, below.

TABLE II

| | Days to Failure 125°C | 150°C |
|---|---|---|
| Blank | 1 2/3 | 1 |
| 0.1 GR 3114 | 34 1/3 | 2 |
| 0.25 GR 3114 | 66 2/3 | 5 |
| 0.1 AO-E. (0.1) | 26 2/3 | 1 2/3 |
| 0.25 AO-E (0.25) | >70 | 6 |
| 0.1 AO-F | 41 | 2 1/3 |
| 0.25 AO-F | >70 | 5 |
| 0.1 AO-G | 53 2/3 | 5 1/3 |
| 0.25 AO-G | >70 | 10 |
| 0.125 AO-E + 0.125 AO-3114 | >70 | 9 |
| 0.125 AO-F + 0.125 AO-3114 | >70 | 9 1/3 |
| 0.125 AO-G (0.125) + 0.125 AO-3114 | >70 | 12 |

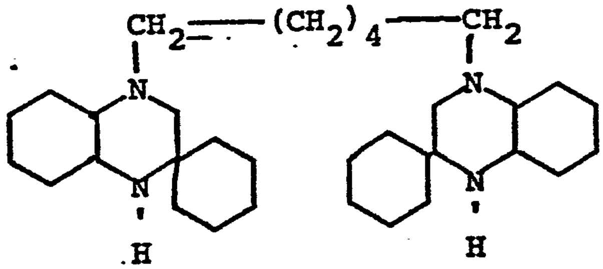

AO-E

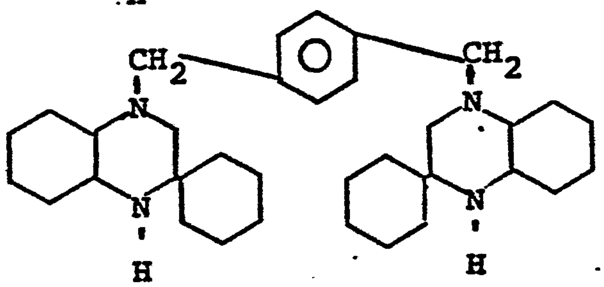

AO-F

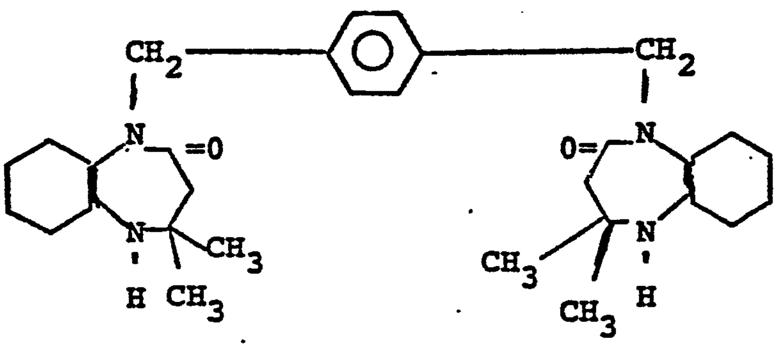

AO-G

CLAIMS

1. Composition of matter resistant to attack by oxygen comprising an organic material having dispersed therein an effective amount of an organic compound represented by the following structural formula:

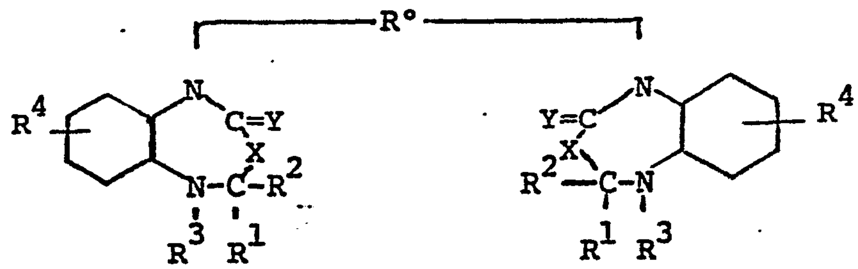

where $R^o$ is selected from substituted and unsubstituted alkylene, alkenylene, $-CH_2-R^5-CH_2-$, and ortho- and meta-xylidene groups where the alkylene and alkenylene groups contain 2 to 12 carbon atoms, $R^5$ is selected from cyclohexylene groups, and the substituents are selected from alkyl, hydroxylalkyl and cyanoalkyl groups containing 1 to 12 carbon atoms; $R^1$ and $R^2$ are individually selected from alkyl and alkenyl groups of 1 to 12 carbon atoms, cyanoalkyl and aminoalkyl groups of 1 to 12 carbon atoms, cycloalkyl and hydroxycycloalkyl groups of 4 to 14 carbon atoms, aryl and aralkyl groups of 6 to 14 carbon atoms, all of which can contain substituents selected from phosphite, ester and hindered phenolic groups, and which in combination, $R^1$ and $R^2$, represent unsubstituted and substituted cycloalkyl and cycloaliphatic groups of 4 to 14 carbon atoms at least 4 of which are cyclized and contain a keto, ester, amide, ether, thio or hydroxyl group; $R^3$ groups are independently selected from hydrogen, alkyl and hydroxyalkyl groups of 1 to 12 carbon atoms, cyanoalkyl groups and aminoalkyl groups of 1 to 12 carbon atoms, alkenyl groups of 2 to 14 carbon atoms, and aryl and aralkyl groups of 6 to 14 carbon atoms; $R^4$ groups are independently selected from hydrogen, alkyl and haloalkyl

groups of 1 to 12 carbon atoms, cyanoalkyl and aminoalkyl groups of 1 to 12 carbon atoms, alkenyl groups of 2 to 12 carbon atoms, and aryl and aralkyl groups of 6 to 14 carbon atoms; X is either a $CH_2$ group or a single bond between the adjacent carbon atoms in the diazacyclic group; and Y is either O or $<^H_H$.

2. Composition of claim 1 wherein amount of said organic compound is 0.01 to 10 parts per 100 parts of said organic material, and wherein $R^o$ is selected from substituted and unsubstituted alkylene and alkenylene groups of 2 to 8 carbon atoms, $-CH_2-R^5-CH_2-$ where $R^5$ is a cyclohexylene group, and meta-xylidene groups wherein the substituents are selected from alkyl, hydroxyalkyl, aminoalkyl and cyanoalkyl groups containing 1 to 3 carbon atoms; $R^1$ and $R^2$ are independently selected from alkyl groups of 1 to 8 carbon atoms or they can form, together with the diazacyclic carbon, a cycloaliphatic or a cycloalkyl group wherein 4 to 7 carbons are cyclized; $R^3$ groups are independently selected from hydrogen, alkyl and hydroxyalkyl groups of 1 to 3 carbon atoms; and $R^4$ groups are hydrogens.

3. Composition of claim 2 wherein X is a single bond between the adjacent ring carbon atoms, Y is oxygen, and said organic material is selected from polymonoolefins and dienic polymers.

4. Composition of claim 1 wherein amount of said organic compound is 0.05 to 5 parts per 100 parts of said organic material which is selected from olefinic polymers and copolymers, X is a single bond, $R^1$ and $R^2$ combined represent a cyclohexyl group, $R^3$ and $R^4$ are hydrogens, and $R^o$ is selected from m-xylidene,

$-CH_2-CH=CH-CH_2-$, $-CH_2-(CH_2)_4-CH_2-$, and

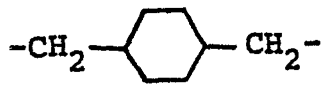

groups.

5. Composition of claim 2 wherein said organic material is selected from homopolymers and copolymers of α-monoolefins, mixtures thereof, and mixtures thereof with diene monomers, X is a $CH_2$ groups, Y is oxygen, $R^1$ and $R^2$ are individually selected from hydrogen and methyl groups, $R^3$ and $R^4$ are hydrogens, and $R^o$ is

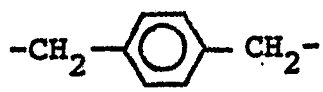

6. Composition of claim 5 wherein said organic material is selected from homopolymers and copolymers of ethylene, propylene, isobutylene, 1-butene, 1-pentene, 1-hexene, 4-methyl-1-pentene, mixtures thereof, and mixtures with diene monomers.

7. Composition of claim 4 wherein said antioxidant composition comprises said organic compound and at least one other antioxidant compound, combined amount of said organic compound and said other antioxidant compound being sufficient to produce a synergistic antioxidant effect.

8. Composition of claim 7 wherein amount of said other antioxidant compound is 0.01 to 5 parts per 100 parts of said organic material and said other antioxidant is selected from hindered phenols.

9. Composition of claim 7 wherein said organic material is selected from homopolymers and copolymers of α-monoolefins, mixtures thereof, and mixtures thereof with diene monomers, said other antioxidant is selected from hindered phenols.

10. Composition of claim 2 wherein $R^o$ is selected from alkylene groups of 2 to 8 carbon atoms, $R^1$ and $R^2$ are independently selected from alkyl groups of 1 to 8 carbon atoms or $R^1$ and $R^2$ can form a cycloaliphatic or cycloalkyl group containing 5 to 7 carbon atoms in the ring, $R^3$ and $R^4$ groups are hydrogens, and said organic material is selected from polyethylene, polypropylene and polymers of ethylene and propylene.